# FASCICULE DE BREVET EUROPEEN

(11) **EP 0 732 310 B1**
(45) Date de publication et mention de la délivrance du brevet: **07.07.1999**
(21) Numéro de dépôt: 96400476.6
(22) Date de dépôt: 06.03.1996
(51) Int. Cl.: C04B 35/111, F16K 25/00

(54) **Céramique à fritter à base d'alumine, procédé de fabrication et pièces de frottement ainsi obtenues**
Keramik auf Basis von Aluminiumoxid, Verfahren zu ihrer Herstellung sowie Reibungselemente daraus
Alumina-based sinterable ceramic, production process therefor and friction element thus obtained

(30) Priorité: 17.03.1995 FR 9503130; 22.06.1995 FR 9507482
(43) Date de publication de la demande: 18.09.1996
(73) Titulaire: NORTON DESMARQUEST FINE CERAMICS, 92400 Courbevoie (FR)
(72) Inventeur: Trabelsi, Ridha, 75014 Paris (FR)
(74) Mandataire: Rinuy, Santarelli

(56) Documents cités:
- EP-A- 0 497 241
- DE-A- 1 671 095
- DE-A- 2 834 146
- US-A- 4 714 640
- CHEMICAL ABSTRACTS, vol. 104, no. 16, 21 Avril 1986 Columbus, Ohio, US; abstract no. 134792j, M.ANDO: "colored alumina ceramic composition" page 303; colonne l; XP002006500 & JP-A-60 176 966 (NGK SPARK PLUG) 11 Septembre 1985
- CHEMICAL ABSTRACTS, vol. 114, no. 24, 17 Juin 1991 Columbus, Ohio, US; abstract no. 239049g, H.SAKAI: "alumina-based ceramic substrate for packaging of semiconductor device and its manufacture" page 704; colonne r; XP002006501 & JP-A-00 321 044 (KYOCERA) 29 Janvier 1991

## Description

Les céramiques à base d'alumine sont très largement utilisées dans de nombreuses applications de frottement en raison de leur haute dureté, de leur bonne résistance à l'usure, et de leur faible coût en comparaison avec d'autres céramiques (à titre d'exemple le carbure de silicium est environ deux fois plus cher).

Une de leurs applications les plus importantes en frottement est la fabrication des disques de mitigeurs (voire mélangeurs) pour la robinetterie sanitaire.

Les produits actuellement les plus utilisés pour cette application sont des alumines comportant un ajout de frittage constitué de silicates d'alcalino-terreux (de Ca ou Mg). Ces produits sont satisfaisants quand ils sont employés graissés, mais leur coefficient de frottement devient élevé quand la graisse s'est éliminée.

Plus généralement, les céramiques à base d'alumine ont actuellement des performances de frottement qui présentent des variations importantes au cours du temps, avec des dégradations pouvant conduire à des risques de blocage bien avant la fin de vie prévue pour les disques de robinets réalisés avec ces céramiques.

Des efforts ont été accomplis en vue d'optimiser la lubrification entre les disques ou les géométries respectives de ceux-ci, et des progrès ont été observés.

L'invention concerne par contre la composition même de ces céramiques à base d'alumine.

L'objet de l'invention est ainsi une composition céramique à base d'alumine ayant une température de frittage modérée (donc de coût modéré) qui se prête bien à l'état fritté aux traitements classiques de rectification et de polissage et qui a un faible coefficient de frottement intrinsèque en l'absence de lubrifiant.

Il faut noter ici que la notion de coefficient de frottement intrinsèque n'est pas une réelle propriété intrinsèque d'un matériau. : le coefficient de frottement entre deux pièces en mouvement dépend en effet de la nature physique et chimique de chacune des deux pièces, mais aussi des géométries respectives de ces pièces et de leur état de surface, de la nature de la lubrification (même s'il ne s'agit que d'eau, froide ou chaude) et enfin des conditions opératoires de détermination de ce coefficient de frottement. Dans la suite de l'exposé, la notion de coefficient de frottement supposera le choix préalable de géométries et de conditions opératoires, la lubrification se faisant par l'eau elle-même. Le mot intrinsèque signifiera que les deux disques de frottement sont réalisés dans le matériau considéré. La notion de coefficient de frottement existe également pour des disques réalisés en matériaux différents (on parle alors de couple de matériaux, ce couple étant homogène lorsque les deux matériaux sont identiques).

C'est ainsi que l'invention a également pour objet une composition céramique à base d'alumine ayant une température de frittage modérée, qui se prête aisément aux traitements classiques de rectification et de polissage et qui a un faible coefficient de frottement, en l'absence de lubrifiant, avec lui-même, et avec certaines autres compositions céramiques à base d'alumine par exemple une céramique connue à environ 1 à 2 % MgO et à 3 à 4 % de SiO₂ (% en poids), le reste étant formé pour l'essentiel par de l'alumine, à quelques impuretés classiques près pour moins de 1 %.

L'invention propose à cet effet une composition céramique à fritter pour pièce de frottement comportant :
- au moins 90 % en poids d'alumine,
- de 1,7 % à 2 % en poids de Mn₃O₄
- de 0,6 % à 1 % en poids de TiO₂
- de 0,5 % à 1,5 % en poids de SiO₂
- au plus 1 % en poids de MgO
- de 0,8 % à 1,6 % en poids d'un oxyde ou mélange d'oxydes d'éléments de transition pris dans le groupe Ni, Co, Fe, Cu, Cr,
- le reste, d'au plus 0,5 % au total étant formé d'impuretés.

Selon des enseignements préférés de l'invention, de préférence combinés :
- la teneur en alumine est d'au moins 94 %,
- la teneur en Mn₃O₄ est sensiblement comprise entre 1,7 % et 1,8 % et la teneur en TiO₂ est sensiblement comprise entre 0,8 et 0,9 %,
- la teneur en MgO est comprise entre 0,6 et 0,7 %,
- le SiO₂ est introduit sous forme de kaolin ou de talc,
- la teneur en oxydes d'éléments de transition est comprise entre 0,8 % et 1,6 % en poids,
- les oxydes de transition sont au moins en partie introduits sous forme d'aluminates,
- lesdits oxydes comportent des oxydes ou aluminates de cobalt.

L'invention est partie de l'hypothèse que le coefficient de frottement d'un couple alumine/alumine peut être abaissé en intégrant à cette alumine frittée des phases susceptibles de se détacher par usure et de constituer alors une couche de lubrifiant solide entre les corps en mouvement.

Si l'on considère par exemple les compositions céramiques à base d'alumine autorisant une température de frittage de l'ordre de 1350°C (utilisées notamment pour des pièces mécaniques de butée) on y trouve couramment la phase MnTiO₃ de structure lamellaire. Cette phase est obtenue après frittage d'une composition à base d'alumine contenant essentiellement de l'oxyde de manganèse et de l'oxyde de titane dans des proportions stoechiométriques (rapport d'environ 2:1).

Cependant, il s'avère que cette composition présente souvent un comportement médiocre en frottement. Ceci peut être lié à sa mauvaise aptitude aux opérations de rectification et de polissage par les procédés industriels courants.

L'addition de SiO₂ seul est apparue favoriser la formation d'un flux vitreux qui renforce la tenue mécanique des joints de grains de la matrice alumine. Une nette amélioration a été constatée après les opérations de rectification et de polissage. Toutefois ce matériau présente des microfissures autour des grains d'alumine, qui semblent pouvoir être attribuées à la présence de la phase MnTiO₃.

L'addition d'oxyde de cobalt ou d'aluminate de cobalt est apparue pouvoir favoriser, en combinaison avec SiO₂, la formation de phases spinelles du type MnAl₂O₄ ou CoAl₂O₄, et d'une phase très proche d'un silicate de cobalt. Cet ajout a permis d'améliorer les performances en frottement de l'alumine ; on a cru pouvoir en déduire que c'était en lien étroit avec l'apparition d'aluminate de manganèse MnAl₂O₄ et d'aluminate de cobalt aux dépens de la phase MnTiO₃.

La fonction de phases spinelles identiques est également obtenue par addition d'oxydes ou d'aluminates de nickel, fer, cuivre, chrome.

Outre leur présence simultanée, l'invention enseigne des plages de teneurs pour les constituants d'ajout.

Une quantité insuffisante de SiO₂ (inférieure à 0,5 %) est apparue conduire à un mauvais comportement au polissage et au frottement.

Une quantité trop élevée de SiO₂ (supérieure à 1,5 %) est apparue conduire à la présence d'une phase vitreuse trop importante fragilisant le matériau.

De même une quantité insuffisante d'oxydes d'éléments de transition (Co, Ni, Fe, Cu ou Cr) (inférieure à 0,6 %) a l'inconvénient de ne pas permettre la formation des phases cristallines souhaitées. Il semble même préférable de prévoir une teneur minimale de 0,8 % en poids.

Par contre un excès d'oxydes d'éléments de transition (Co, Ni, Fe, Cu ou Cr) (supérieur à de 1,2 % à 1,6 % (en rendant de 0 à 0,4 % de Fe₂O₃)) a pour inconvénient une augmentation du prix de revient.

Des plages ont également été définies pour les autres composants.

Des quantités insuffisantes de Mn₃O₄ et de TiO₂ (inférieures à 1,7 % et 0,8 % respectivement) conduisent à une augmentation de la température de frittage.

A l'inverse des teneurs excessives (supérieures à 2 % et 1 %) diminuent les performances du matériau.

Le MgO semble favorable, car il favorise la formation de phases spinelles.

Fe₃O₄ semble défavorable.

Quelques impuretés ou ajouts peuvent être tolérés, pour une teneur maximale de 0,5 %. Il s'agit par exemple de CaO, Na₂O, K₂O, impuretés habituelles dans l'alumine.

L'invention a également pour objet un procédé de fabrication de pièces de frottement ayant les propriétés précitées.

Elle propose à cet effet, un procédé de fabrication d'une pièce de frottement comportant l'étape de préparation d'une composition conforme à ce qui précède, l'étape de réalisation d'une pièce crue ayant cette composition, et l'étape de cuisson dans des conditions de frittage propres à générer des phases d'aluminates de manganèse et/ou de cobalt.

Selon des enseignements préférés de l'invention, éventuellement combinés :
- la composition comporte au moins 94 % d'alumine,
- la teneur en Mn₃O₄ est sensiblement comprise entre 1,7 % et 1,8 % et la teneur en TiO₂ est sensiblement comprise entre 0,8 et 0,9 %,
- l'étape de cuisson consiste à faire passer la pièce crue à une température comprise entre 1510 et 1540°C pendant une heure environ,
- du SiO₂ est introduit par exemple sous forme de kaolin,
- la teneur en oxydes d'éléments de transition (Ni, Co, Cu, Fe, Cr) est comprise entre 0,8 % et 1,6 % (de préférence de moins de 1,2 %) en poids, cet oxyde ou mélange d'oxydes étant introduits par exemple sous forme d'aluminates,
- la teneur en MgO est comprise entre 0,6 et 0,7 % en poids,
- les oxydes ou mélange d'oxydes comportent des oxydes ou aluminates de cobalt.

Il est à la portée de l'homme de métier de déterminer des conditions efficaces de frittage pour une quelconque composition à fritter, quitte à procéder à quelques tâtonnements préliminaires. Ces conditions efficaces de frittage sont généralement celles qui permettent d'atteindre une densité suffisante (typiquement 90 % voire 95 % de la densité théorique maximale) en combinaison avec une granulométrie sensiblement fine et homogène (typiquement inférieure ou égale à 10 microns). Le choix de conditions de frittage permettant d'atteindre ce double objectif est apparu suffire généralement pour que l'on obtienne après frittage les phases d'aluminates recherchées.

L'invention a également pour objet un couple de pièces de frottement pouvant être utilisées dans des robinets sanitaires, dont la fabrication soit économique et dont le coefficient de frottement soit aussi faible et régulier que possible en service.

Elle propose à cet effet un couple de pièces de frottement dont l'une au moins comporte :
- au moins 90 % en poids d'alumine,
- de 1,7 % à 2 % en poids de Mn₃O₄
- de 0,8 % à 1 % en poids de TiO₂
- de 0,5 % à 1,5 % en poids de SiO₂
- au plus 1 % en poids de MgO
- de 0,6 % à 1,6 % en poids d'un oxyde ou mélange d'oxydes d'éléments de transition tels que Ni, Co, Fe, Cu, Cr,
- le reste, d'au plus 0,5 % au total étant formé d'impuretés,
   ladite pièce ayant une densité d'au moins 90 % de la densité théorique maximale et comportant une proportion détectable en rayons X de phases d'aluminates de manganèse et/ou de cobalt.

De manière avantageuse cette densité est comprise, en fonction des conditions de frittage et de la composition exacte, entre 3,79 et 3,86 ± 0,03.

Selon des enseignements préférés éventuellement combinés :
- la teneur en alumine est d'au moins 94 %,
- la teneur en Mn₃O₄ est sensiblement comprise entre 1,7 % et 1,8 % et la teneur en TiO₂ est sensiblement comprise entre 0,7 et 0,9 %,
- la teneur en oxyde ou mélange d'oxydes d'éléments de transition (Ni, Co, Fe, Cu, Cr) est comprise entre 0,8 % et 1,6 % (de préférence moins de 1,2 %),
- la teneur en MgO est comprise entre 0,6 et 0,7 %,
- les deux pièces de frottement ont sensiblement la même composition,
- l'autre pièce de frottement comporte essentiellement entre 1 et 2 % (de préférence entre 1 et 1,5 %) de MgO et 3 % à 4 % (de préférence de 3 % à 3,5 %) de SiO₂, le reste étant de l'alumine à des impuretés près,
- les oxydes ou mélange d'oxydes comportent des oxydes ou aluminates de cobalt.

Des objets, caractéristiques et avantages de l'invention ressortent de la description qui suit, donnée à titre d'exemple non limitatif, en regard des dessins annexés sur lesquels :
- la figure 1A est une vue en coupe axiale de deux pièces sur le point d'être affrontées pour un test de frottement,
- la figure 1B est une vue de dessus de la pièce du dessous,
- la figure 1C est une vue de dessous de la pièce de dessus,
- la figure 2 est un graphe montrant l'évolution au cours du temps du couple de frottement entre deux disques conformes à la composition de l'exemple 1,
- la figure 3 est un graphe correspondant à l'exemple 2 du tableau,
- la figure 4 est un graphe similaire correspondant à l'exemple 3,
- la figure 5 est un graphe similaire correspondant à l'exemple 4,
- la figure 6 montre des diagrammes de diffraction en rayons X de matériaux conformes ou semblables aux exemples 1 et 2,
- la figure 7 montre des diagrammes de diffraction en rayons X pour un matériau conforme à l'exemple 3, pris en surface ou à coeur,
- la figure 8 montre des diagrammes de diffraction pour des matériaux conformes aux exemples 3 et 5,
- la figure 9 montre des diagrammes de diffraction pour le matériau de l'exemple 5 pour différentes températures de frittage,
- la figure 10 est un graphe montrant l'évolution au cours du temps du couple de frottement entre un disque réalisé en une céramique commune à base d'alumine et un disque conforme à la composition de l'exemple 1,
- la figure 11 est un graphe similaire, pour la composition de l'exemple 3,
- la figure 12 est un graphe similaire, pour la composition de l'exemple 4, et
- la figure 13 est un graphe similaire, pour la composition de l'exemple 5.

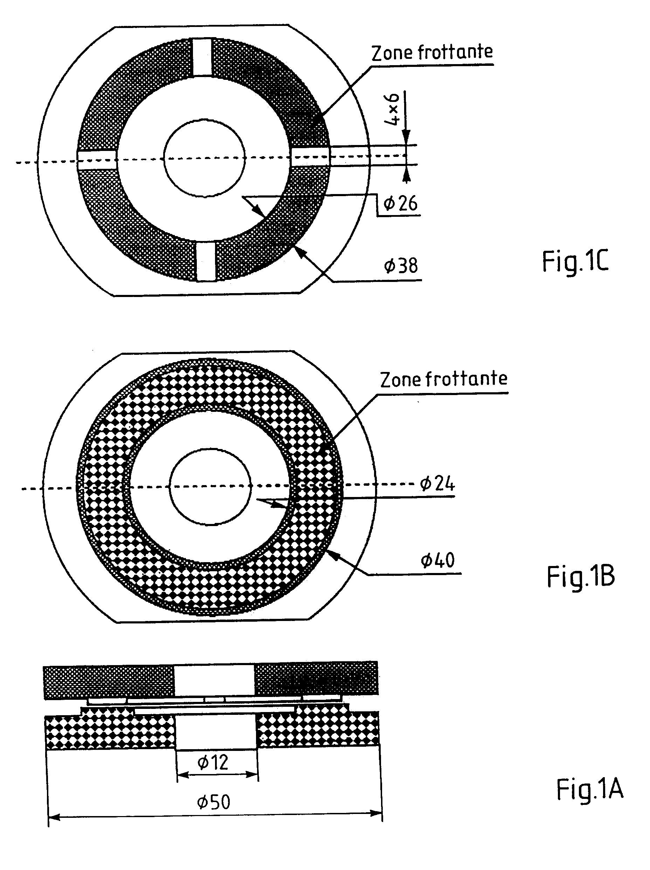

Les caractéristiques de frottement seront dans la suite exprimées en terme de couples de frottement mesurés avec des disques tels que définis aux figures 1A, 1B et 1C, soumis à un mouvement rotatif alternatif dans l'eau (froide, c'est-à-dire inférieure à 20°C) sous une pression de 4 bars, avec une amplitude angulaire de ± 55°, pendant 200.000 cycles à la vitesse d'environ 5 cycles par minute (ce qui correspond à une durée d'essai d'un mois environ).

La pièce inférieure de la figure 1A est fixe tandis que la pièce supérieure lui reste concentrique pendant son mouvement alternatif. Cette pièce est continue circonférentiellement tandis que la pièce supérieure est radialement plus étroite (ce qui explique l'existence à la figure 1B de liserés grisés bordant la zone frottante) et comporte des rainures ou gorges radiales. L'aire de contact est de 4,6 cm² ce qui est tout à fait comparable à l'aire de contact entre des disques réels de disques de robinets sanitaires.

Plusieurs compositions ont été testées. Elles sont recensées sur le tableau annexé.

### Exemple 1

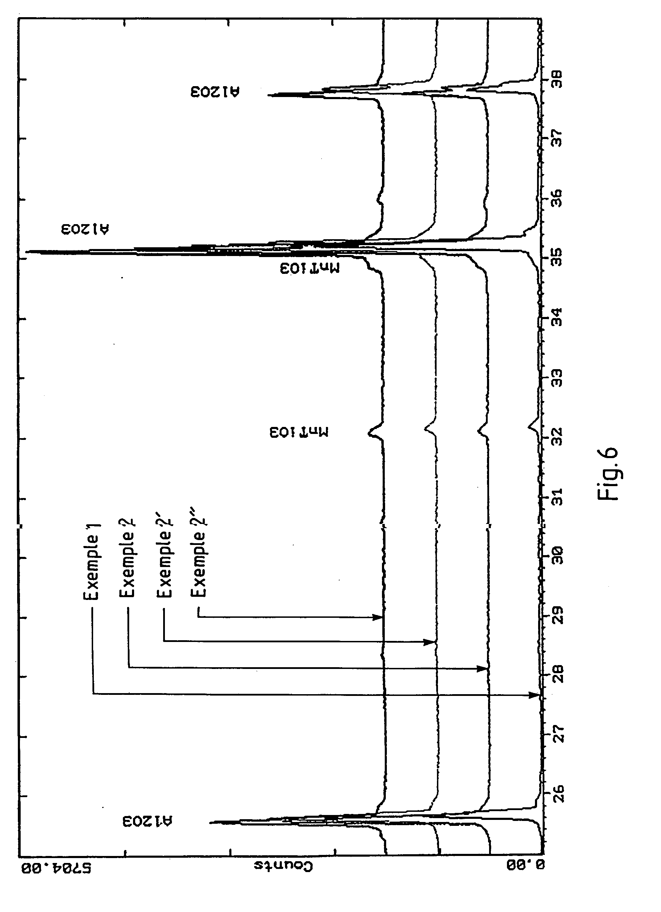

Une poudre atomisée est obtenue par broyage humide de trois oxydes Al₂O₃, Mn₃O₄ et TiO₂ dans des proportions respectives de 97,5 %, 1,7 % et 0,8 %. Cette poudre est ensuite comprimée et frittée pendant une heure dans une plage de températures situées entre 1350°C et 1580°C (ici vers 1350°C) sous forme d'éprouvettes destinées aux essais de frottement (figures 1A, 1B et 1C). L'analyse par diffraction de rayons X du produit fritté (voir la figure 6) révèle bien la présence de la phase MnTiO₃ ; la formation d'aluminate de manganèse n'a pu être détectée par cette analyse.

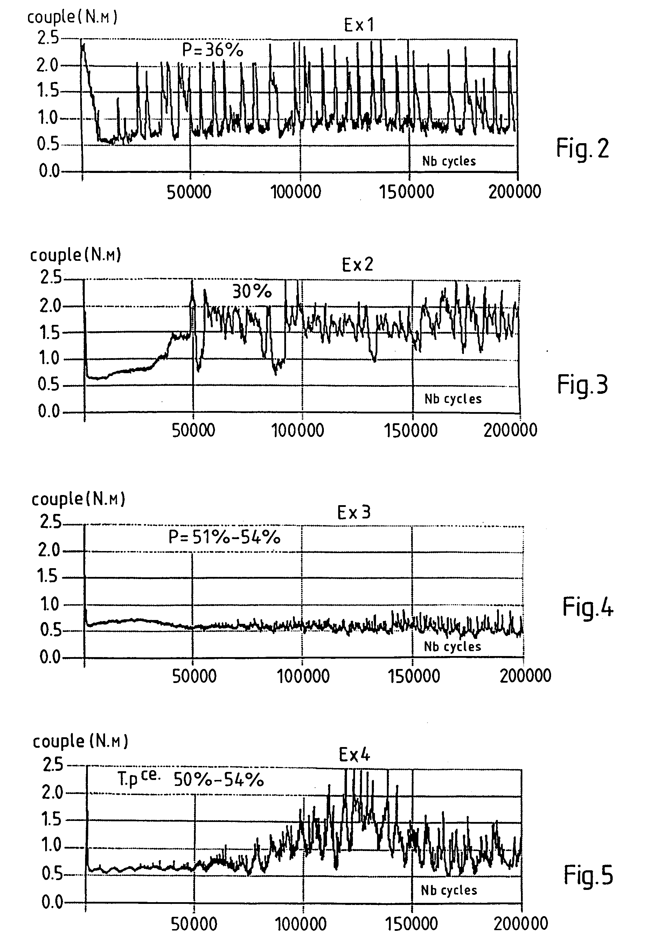

Les éprouvettes sont ensuite rectifiées et polies (planéité = 2 franges de longueur d'onde 0,6 µm : rugosité Ra = de 0,17 à 0,27 µm ; taux de portance mesurés compris entre 23 % et 56 %) puis testées par frottement. L'évolution du couple de frottement représenté à la figure 2 (avec un taux de portance P de 36 %) est instable, avec une valeur moyenne qui dépasse le seuil de 0,5 N.m. et des pics très fréquents qui atteignent 1,5 voire 2 N.m.

### Exemple 2

Une poudre atomisée est obtenue par broyage humide de trois oxydes Al₂O₃, Mn₃O₄, TiO₂ et de kaolin (pour amener du SiO₂) dans les proportions respectives de 96,7 %, 1,7 %, 0,8 % et de 0,8 % ce qui correspond à la composition de l'exemple 2 du tableau puisque le kaolin est formé d'environ 2/3 de silice et d'1/3 d'alumine. Cette poudre est ensuite comprimée et frittée pendant une heure dans une plage de température située entre 1350°C et 1580°C (ici 1350°C) sous forme d'éprouvettes destinées aux essais de frottement. L'analyse par diffraction des rayons X du produit fritté (voir la figure 6) révèle bien la présence de la phase MnTiO₃ ; la formation d'aluminate de manganèse n'a pu être détectée par cette analyse.

Sur cette figure apparaît également le graphe correspondant à une composition 2' ne se distinguant de l'exemple 2 que par 0,5 % de SiO₂ en plus et 0,5 % d'alumine en moins ; il y a aussi le graphe d'une composition 2'' correspondant à la même composition nominale que la composition 2. Ces graphes se superposent à un décalage axial près qui a été introduit pour des raisons de lisibilité.

Les éprouvettes sont ensuite rectifiées et polies (planéité = 2 franges de longueur d'onde 0,6 µm ; rugosité Ra = 0,15 à 0,20 µm ; taux de portance compris entre 33 % et 66 %) puis testées en frottement. L'évolution du couple de frottement (voir figure 3) est instable, avec une valeur moyenne qui dépasse sensiblement le seuil (voir figure 3) de 0,5 N.m et comporte de nombreux pics.

### Exemple 3

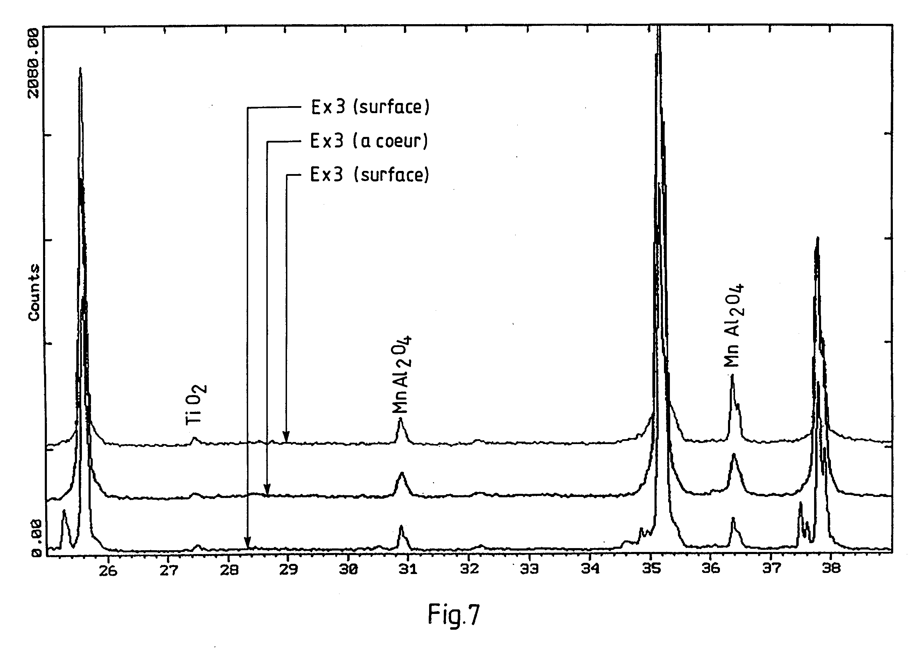

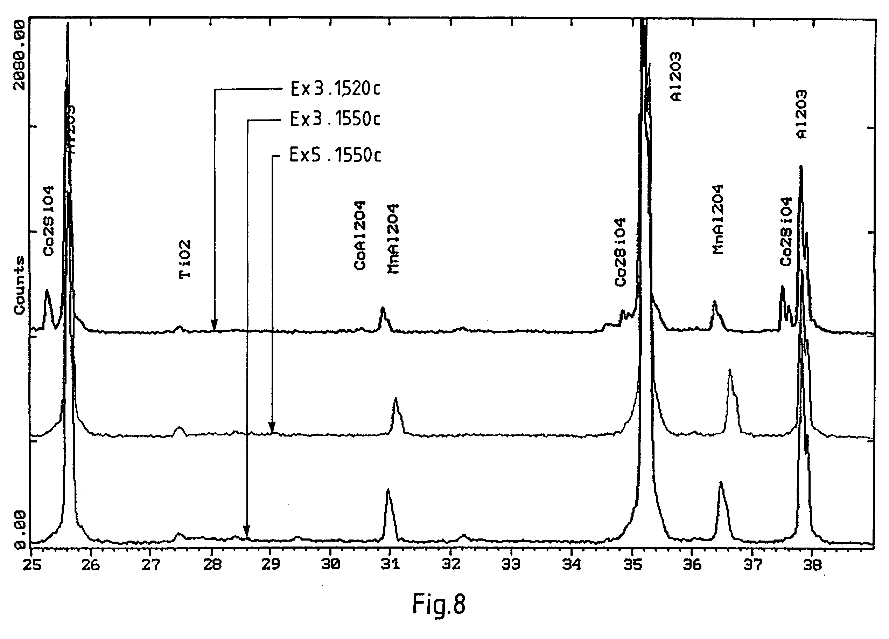

Une poudre atomisée est obtenue par broyage humide de trois oxydes Al₂O₃, Mn₃O₄, TiO₂, de kaolin et de l'aluminate de cobalt CoAl₂O₄ pour former un produit qui contient les proportions en oxydes suivantes : Al₂O₃ = 96,14 % ; Mn₃O₄ =1,7 % ; TiO₂ = 0,8 W SiO₂ = 0,5 % ; CoO = 0,82 %. Cette poudre est ensuite comprimée et frittée pendant une heure dans une plage de température située entre 1480°C et 1580°C (1520°C dans l'exemple considéré) sous forme d'éprouvettes destinées aux essais de frottement. L'analyse par diffraction des rayons X du produit fritté (voir la figure 7) révèle bien la formation d'aluminate de manganèse MnAl₂O₄ et d'aluminate de cobalt aux dépens de la phase MnTiO₃. Du TiO₂ libre est mis en évidence lors de cette analyse. En fait cette figure montre trois graphes correspondant à des observations à coeur ou en surface : ils sont fort semblables. Quant à la figure 8 elle montre deux graphes correspondant à cet exemple 3, pour des températures de frittage de 1520°C et de 1550°C (en outre, pour 1520°C, le CoO est introduit en tant que tel tandis que pour 1550°C il est introduit sous forme d'aluminate de cobalt : les graphes sont très semblables).

Les éprouvettes sont ensuite rectifiées et polies (planéité = 2 franges de longueur d'onde 0,3 µm ; rugosité Ra = de 0,10 à 0,15 µm ; taux de portance compris entre 48 % et 70 %) puis testées en frottement. L'évolution du couple de frottement dans ce cas (voir figure 4) est stable, la valeur moyenne se situe autour de 0,5 N.m.

### Exemple 4

Une poudre atomisée est obtenue par broyage humide de trois oxydes Al₂O₃, Mn₃O₄, TiO₂, de kaolin, de l'aluminate de cobalt CoAl₂O₄ et de l'oxyde de fer pour former un produit qui contient les proportions en oxyde suivantes : Al₂O₃ = 95,8 %, Mn₃O₄ = 1,7 % : TiO₂ = 0,8 % ; SiO₂ = 0,5 % ; CoO = 0,54 % ; Fe₂O₃ = 0,63 %. Cette poudre est ensuite comprimée et frittée pendant une heure dans une plage de température située entre 1480°C et 1580°C (ici 1480°C) sous forme d'éprouvettes destinées aux essais de frottement. L'analyse par diffraction des rayons X du produit fritté révèle bien la formation d'aluminate de manganèse MnAl₂O₄, d'aluminate de cobalt et d'aluminate de fer aux dépens de la phase MnTiO₃.

Les éprouvettes sont ensuite rectifiées et polies (planéité = 2 franges de longueur d'onde 0,3 µm ; rugosité Ra = de 0,15 à 0,20 µm ; taux de portance compris entre 38 % et 60 %) puis testées en frottement. L'évolution du couple de frottement tel que représenté à la figure 5 est instable au-delà de 50.000 cycles ; la valeur moyenne dépasse sensiblement le seuil de 0,5 N.m.

### Exemple 5

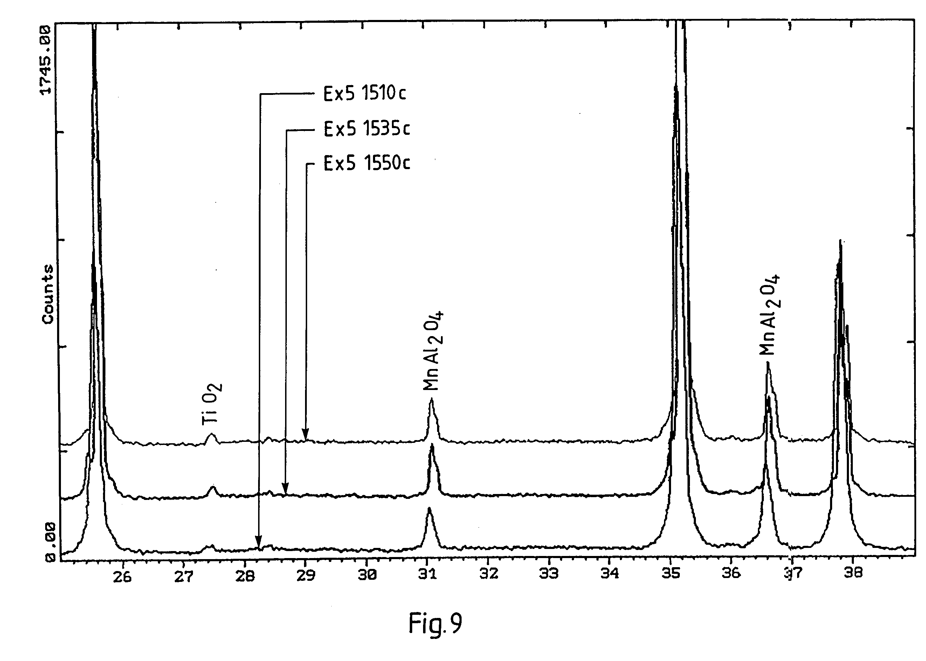

Une poudre atomisée est obtenue par broyage humide de quatre oxydes Al₂O₃, Mn₃O₄, TiO₂, CoO, et du talc pour former un produit qui contient les proportions en oxydes suivantes : Al₂O₃ = 95,4 % ; Mn₃O₄ = 1,7 % ; TiO₂ = 0,8 % ; SiO₂ = 1,33 % ; CoO = 1 % ; MgO = 0,63 %. Cette poudre est ensuite comprimée et frittée dans une plage de température située entre 1480°C et 1580°C (ici 1535°C) sous forme d'éprouvettes destinées aux essais de frottement. L'analyse par diffraction des rayons X du produit fritté (voir la figure 9) révèle bien la formation d'aluminate de manganèse MnAl₂O₄ et d'aluminate de cobalt aux dépens de la phase MnTiO₃. On observe sur cette figure 9 que des graphes similaires sont obtenus après des températures de frittage différents (le cas Ex.5-1550°C apparaissant également à la figure 8).

Les éprouvettes sont ensuite rectifiées et polies (planéité = 2 franges de longueur d'onde 0,3 µm ; rugosité Ra = 0,09 à 0,13 µm ; taux de portance compris entre 45 % et 70 %) puis testées en frottement. L'évolution du couple de frottement dans ce cas est stable, la valeur moyenne se situe autour de 0,4 N.m.

Seuls des couples homogènes ont été considérés jusqu'ici, c'est-à-dire que les couples de frottement ont été considérés entre disques ou éprouvettes réalisés dans des matériaux sensiblement identiques.

Les compositions envisagées ci-dessus ont également été testées en frottement "hétérogène" c'est-à-dire avec un disque réalisé en un matériau différent.

Cet autre matériau de référence a été choisi arbitrairement comme étant composé essentiellement de :
- 1,35 % de MgO,
- 3,5 % de SiO₂,
- le reste étant de l'alumine à des impuretés près.

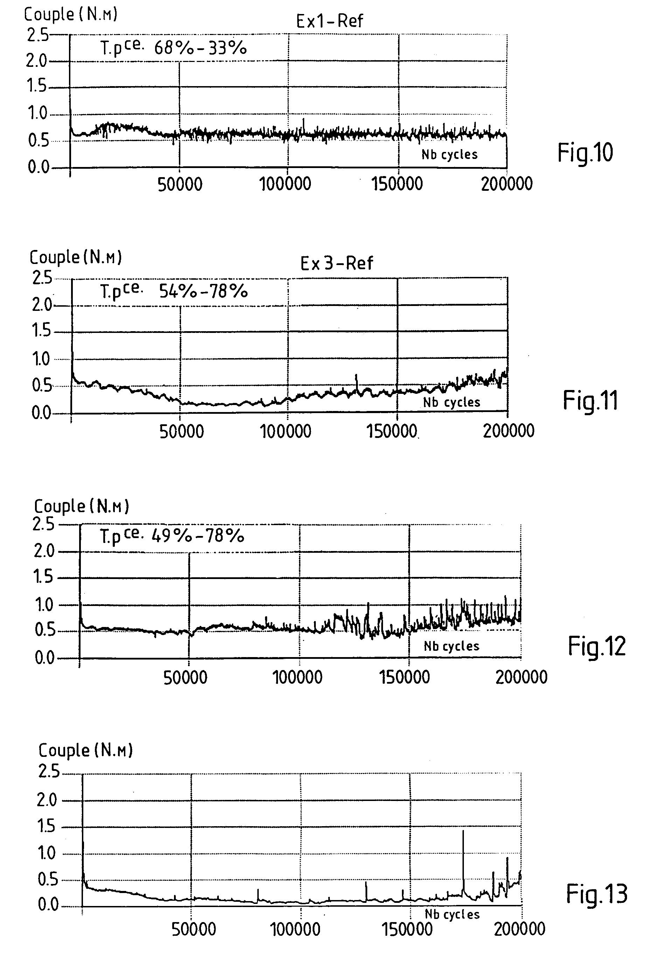

Ainsi que cela ressort de la figure 10, le couple de frottement entre matériau de l'exemple 1 et le matériau de référence est bien plus stable que sur la figure 2. Il reste toutefois supérieur à 0,5 N.m.

Lorsque l'on prend la composition 3, on observe également un progrès sensible par rapport au cas homogène de la figure 4, jusqu'à une moyenne inférieure à 0,4 N.m.

Lorsque l'on prend la composition 4, on observe un progrès, avec toutefois la persistance de pics et une valeur moyenne supérieure à 0,5 N.m.

Enfin, dans le cas de la composition 5, on observe de très faibles valeurs de couple avec, à la figure 13, une valeur de l'ordre de 0,3 N.m sur une partie substantielle de la durée de vie.

Il est apparu par contre que des essais dans le cas où les disques sont tous deux dans le matériau de référence conduisent à des couples de frottement supérieurs en moyenne à ceux constatés pour des couples homogènes selon la composition 3 ou la composition 5. A fortiori ces couples sont supérieurs à ceux obtenus pour les couples hétérogènes des figures 11 et 13.

Il en résulte que les exemples 3 et 5 marquent un progrès vis-à-vis du matériau de référence et conduisent, en combinaison avec celui-ci, à des couples de frottement inférieurs à ceux constatés dans des conditions similaires avec des alumines connues. Par contre, les exemples 1, 2 et 4 se révèlent moins intéressants. La comparaison de ces deux groupes d'exemples conduit à la définition donnée en bas du tableau concernant l'analyse chimique d'une composition conforme à l'invention, et certaines particularités du produit fritté obtenu à partir de cette composition (il n'y a pas de changement significatif de l'analyse chimique au cours du frittage). La quantification des phases aluminates est difficile ; il paraît toutefois que lorsque la quantité de ces phases est significative (pics visibles en diffraction X, par exemple) en combinaison avec le respect des conditions d'analyse chimique (en particulier quant à la teneur en oxyde de fer) on profite des avantages de l'invention.

Il va de soi que la description qui précède n'a été proposée qu'à titre d'exemple non limitatif et que de nombreuses variantes peuvent être proposées par l'homme de l'art sans sortir du cadre de l'invention.

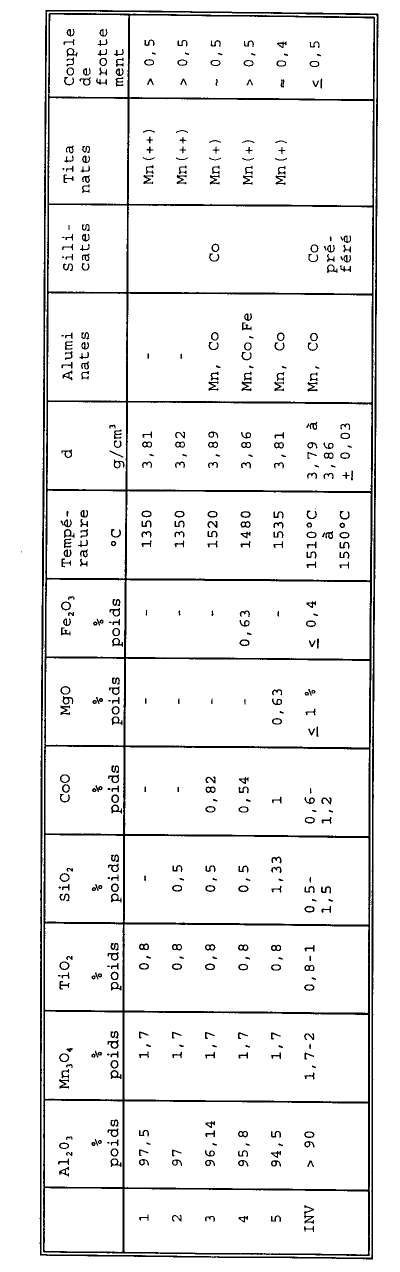

## Revendications

1. Composition céramique à fritter pour pièce de frottement comportant :
- au moins 90 % en poids d'alumine,
- de 1,7 % à 2 % en poids de Mn₃O₄
- de 0,8 % à 1 % en poids de TiO₂
- de 0,5 % à 1,5 % en poids de SiO₂
- au plus 1 % en poids de MgO
- de 0,6 % à 1,6 % en poids d'oxyde ou de mélange d'oxydes d'éléments de transition, tels que Ni, Co, Fe, Cu, Cr,
- le reste, d'au plus 0,5 % au total étant formé d'impuretés.

2. Composition céramique selon la revendication 1, caractérisée en ce que la teneur en alumine est d'au moins 94 %.

3. Composition céramique selon la revendication 1 ou la revendication 2, caractérisée en ce que la teneur en Mn₃O₄ est sensiblement comprise entre 1,7 % et 1,8 % et la teneur en TiO₂ est sensiblement comprise entre 0,8 et 0,9 %.

4. Composition céramique selon l'une quelconque des revendications 1 à 3, caractérisée en ce que la teneur en MgO est comprise entre 0,6 et 0,7 %

5. Composition céramique selon l'une quelconque des revendications 1 à 4, caractérisée en ce que le SiO₂ est introduit sous forme de kaolin ou de talc.

6. Composition selon l'une quelconque des revendications 1 à 5, caractérisée en ce que la teneur en oxyde ou mélange d'oxydes d'éléments de transition est comprise entre 0,8 % et 1,6 % en poids, de préférence au moins 1,2 % en poids.

7. Composition céramique selon l'une quelconque des revendications 1 à 6, caractérisée en ce que l'oxyde ou le mélange d'oxydes d'éléments de transition est introduit sous forme d'oxydes ou d'aluminates.

8. Composition selon l'une quelconque des revendications 1 à 7, caractérisé en ce que ledit oxyde contient un oxyde ou aluminate de cobalt.

9. Procédé de fabrication d'une pièce de frottement comportant l'étape de préparation d'une composition conforme à la revendication 1, l'étape de réalisation d'une pièce crue ayant cette composition, et l'étape de cuisson dans des conditions de frittage propres à générer des phases d'aluminates de manganèse et/ou de cobalt.

10. Procédé de fabrication selon la revendication 9, caractérisé en ce que la composition comporte au moins 94 % d'alumine.

11. Procédé de fabrication selon la revendication 9 ou la revendication 10, caractérisé en ce que la teneur en Mn₃O₄ est sensiblement comprise entre 1,7 % et 1,8 % et la teneur en TiO₂ est sensiblement comprise entre 0,8 et 0,9 %.

12. Procédé de fabrication selon la revendication 11, caractérisé en ce que l'étape de cuisson consiste à faire passer la pièce crue à une température comprise entre 1510 et 1540°C pendant une heure environ.

13. Procédé de fabrication selon l'une quelconque des revendications 9 à 12, caractérisé en ce que du SiO₂ est introduit sous forme de kaolin ou de talc.

14. Procédé selon l'une quelconque des revendications 9 à 13, caractérisé en ce que la teneur en oxyde ou mélange d'oxydes d'éléments de transition est comprise entre 0,8 % et 1,6 %, de préférence moins de 1,2 %.

15. Procédé de fabrication selon l'une quelconque des revendications 9 à 14, caractérisé en ce que l'oxyde ou mélange d'oxydes d'éléments de transition est introduit sous forme d'aluminates ou d'oxydes.

16. Procédé de fabrication selon l'une quelconque des revendications 9 à 15, caractérisé en ce que la teneur en MgO est comprise entre 0,6 et 0,7 % en poids.

17. Procédé de fabrication selon l'une quelconque des revendications 9 à 16, caractérisé en ce que ledit oxyde contient un oxyde ou un aluminate de cobalt.

18. Couple de pièces de frottement dont l'une au moins comporte :
- au moins 90 % en poids d'alumine,
- de 1,7 % à 2 % en poids de Mn₃O₄
- de 0,8 % à 1 % en poids de TiO₂
- de 0,5 % à 1,5 % en poids de SiO₂
- au plus 1 % en poids de MgO
- de 0,6 % à 1,6 % en poids d'oxyde ou mélange d'oxydes d'élément de transition, tels que Ni, Co, Cr, Fe, Cu,
- le reste, d'au plus 0,5 % au total étant formé d'impuretés,
ladite pièce ayant une densité d'au moins 90 % de la densité théorique maximale et comportant une proportion détectable en rayons X de phases d'aluminates de manganèse et/ou de cobalt.

19. Couple de pièces de frottement selon la revendication 18, caractérisé en ce que la teneur en alumine est d'au moins 94 %.

20. Couple de pièces de frottement selon la revendication 18 ou la revendication 19, caractérisé en ce que la teneur en Mn₃O₄ est sensiblement comprise entre 1,7 % et 1,8 % et la teneur en TiO₂ est sensiblement comprise entre 0,8 et 0,9 %.

21. Couple de pièces de frottement selon l'une quelconque des revendications 18 à 20, caractérisé en ce que la teneur en oxyde ou mélange d'oxydes d'élément de transition, tels que Ni, Co, Fe, Cu, Cr, est comprise entre 0,8 % et 1,6 %, de préférence moins de 1,2 % en poids.

22. Couple de pièces de frottement selon l'une quelconque des revendications 18 à 21, caractérisé en ce que la teneur en MgO est comprise entre 0,6 et 0,7 %.

23. Couple de pièces de frottement selon l'une quelconque des revendications 18 à 22, caractérisé en ce que les deux pièces de frottement ont sensiblement la même composition.

24. Couple de pièces de frottement selon l'une quelconque des revendications 20 à 22, caractérisé en ce que l'autre pièce de frottement comporte essentiellement entre 1 et 2 % de MgO et 3 % à 4 % de SiO₂, le reste étant de l'alumine à des impuretés près.

25. Couple de pièces de frottement selon la revendication 24, caractérisé en ce que la teneur en MgO est comprise entre 1 et 1,5 % et la teneur en SiO₂ est comprise entre 3 et 3,5 %.

26. Couple de pièces de frottement selon l'une quelconque des revendications 18 à 25, caractérisé en ce que ledit oxyde contient un oxyde ou un aluminate de cobalt.

## Claims

1. Ceramic composition for sintering into a friction part containing:
- at least 90% by weight alumina,
- 1.7% by weight to 2% by weight Mn₃O₄,
- 0.8% by weight to 1% by weight TiO₂,
- 0.5% by weight to 1.5% by weight SiO₂,
- not more than 1% by weight MgO,
- 0.6% by weight to 1.6% by weight of an oxide or mixture of oxides of transition elements such as Ni, Co, Fe, Cu, Cr,
- the remainder, not more than 0.5% in total, comprising impurities.

2. Ceramic composition according to claim 1 characterized in that the alumina content is at least 94%.

3. Ceramic composition according to claim 1 or claim 2 characterized in that the Mn₃O₄ content is substantially between 1.7% and 1.8% and the TiO₂ content is substantially between 0.8% and 0.9%

4. Ceramic composition according to any one of claims 1 to 3 characterized in that the Mgo content is between 0.6% and 0.7%.

5. Ceramic composition according to any one of claims 1 to 4 characterized in that the SiO₂ is introduced in the form of kaolin or talc.

6. Composition according to any one of claims 1 to 5 characterized in that the content in oxide or mixture of oxides of transition elements is between 0.8% by weight and 1.6% by weight, preferably at least 1.2% by weight.

7. Ceramic composition according to any one of claims 1 to 6 characterized in that the oxide or mixture of oxides of transition elements is introduced in the form of oxides or aluminates.

8. Composition according to any one of claims 1 to 7, characterized in that said oxide contains a cobalt oxide or a cobalt aluminate.

9. Method of manufacturing a friction part including the step of preparing a composition according to claim 1, the step of manufacturing an untreated part having that composition, and the step of firing under sintering conditions adapted to generate manganese and/or cobalt aluminate phases.

10. Method of manufacture according to claim 9 characterized in that the composition includes at least 94% alumina.

11. Method of manufacture according to claim 9 or claim 10 characterized in that the Mn₃O₄ content is substantially between 1.7% and 1.8% and the TiO₂ content is substantially between 0.8% and 0.9%

12. Method of manufacture according to claim 11 characterized in that the firing step consists in heating the untreated part to a temperature between 1 510°C and 1 540°C for approximately one hour.

13. Method of manufacture according to any one of claims 9 to 12 characterized in that the SiO₂ is introduced in the form of kaolin or talc.

14. Method according to any one of claims 9 to 13 characterized in that the content in oxide or mixture of oxides of transition elements is between 0.8% and 1.6%, preferably less than 1.2%.

15. Method of manufacture according to any one of claims 9 to 14 characterized in that the oxide or mixture of oxides of transition elements is introduced in the form of aluminates or oxides.

16. Method of manufacture according to any one of claims 9 to 15 characterized in that the Mgo content is between 0.6% by weight and 0.7% by weight.

17. Method of manufacture according to any one of claims 9 to 16 characterized in that the said oxide contains a cobalt oxide or a cobalt aluminate.

18. Pair of friction parts at least one of which contains:
- at least 90% by weight alumina,
- 1.7% by weight to 2% by weight Mn₃O₄,
- 0.8% by weight to 1% by weight TiO₂,
- 0.5% by weight to 1.5% by weight SiO₂,
- not more than 1% by weight MgO,
- 0.6% by weight to 1.6% by weight of an oxide or mixture of oxides of transition elements such as Ni, Co, Cr, Fe, Cu,
- the remainder, not more than 0.5% in total, comprising impurities,
said part having a specific gravity at least 90% of the theoretical maximum specific gravity and containing a proportion of manganese aluminate and/or cobalt aluminate phases detectable by X-rays.

19. Pair of friction parts according to claim 18 characterized in that the alumina content is at least 94%.

20. Pair of friction parts according to claim 18 or claim 19 characterized in that the Mn₃O₄ content is substantially between 1.7% and 1.8% and the TiO₂ content is substantially between 0.8% and 0.9%

21. Pair of friction parts according to any one of claims 18 to 20 characterized in that the content in oxide or mixture of oxides of transition elements such as Ni, Co, Fe, Cu, Cr is between 0.8% and 1.6%, preferably less than 1.2% by weight.

22. Pair of friction parts according to any one of claims 18 to 21 characterized in that the Mgo content is between 0.6% and 0.7%.

23. Pair of friction parts according to any one of claims 18 to 22 characterized in that the two friction parts have substantially the same composition.

24. Pair of friction parts according to any one of claims 20 to 22 characterized in that the other friction part essentially contains between 1% Mgo and 2% Mgo and 3% Sio₂ to 4% Sio_{2,} the remainder being alumina and impurities.

25. Pair of friction parts according to claim 24 characterized in that the Mgo content is between 1% and 1.5% and the Sio₂ content is between 3% and 3.5%.

26. Pair of friction parts according to any one of claims 18 to 25 characterized in that said oxide contains a cobalt oxide or a cobalt aluminate.

## Patentansprüche

1. Keramikzusammensetzung zum Sintern als Reibungselement, umfassend:
- mindestens 90 Gew.-% Aluminiumoxid,
- 1,7 bis 2 Gew.-% Mn₃O₄,
- 0,8 bis 1 Gew.-% TiO₂,
- 0,5 bis 1,5 Gew.-% SiO₂,
- höchstens 1 Gew.-% MgO,
- 0,6 bis 1,6 Gew.-% eines Oxids oder einer Oxidmischung von Übergangselementen, wie Ni, Co, Fe, Cu, Cr,
- höchstens insgesamt 0,5 % durch Verunreinigungen gebildeter Rest.

2. Keramikzusammensetzung nach Anspruch 1, dadurch gekennzeichnet, daß der Aluminiumoxidgehalt mindestens 94 % beträgt.

3. Keramikzusammensetzung nach Anspruch 1 oder 2, dadurch gekennzeichnet, daß der Gehalt an Mn₃O₄ in etwa 1,7 bis 1,8 % und der Gehalt an TiO₂ in etwa 0,8 bis 0,9 % beträgt.

4. Keramikzusammensetzung nach irgendeinem der Ansprüche 1 bis 3, dadurch gekennzeichnet, daß der Gehalt an MgO 0,6 bis 0,7 % beträgt.

5. Keramikzusammensetzung nach irgendeinem der Ansprüche 1 bis 4, dadurch gekennzeichnet, daß das SiO₂ in Form von Kaolin oder Talk eingeführt wird.

6. Zusammensetzung nach irgendeinem der Ansprüche 1 bis 5, dadurch gekennzeichnet, daß der Gehalt an Oxid oder Oxidmischung der Übergangselemente 0,8 bis 1,6 Gew.-%, bevorzugt mindestens 1,2 Gew.-% beträgt.

7. Keramikzusammensetzung nach irgendeinem der Ansprüche 1 bis 6, dadurch gekennzeichnet, daß das Oxid oder die Oxidmischung der Übergangselemente in Form von Oxiden oder Aluminaten eingeführt wird.

8. Zusammensetzung nach irgendeinem der Ansprüche 1 bis 7, dadurch gekennzeichnet, daß das Oxid ein Oxid oder Aluminat von Cobalt enthält.

9. Verfahren zur Herstellung eines Reibungselements. umfassend den Schritt der Herstellung einer Zusammensetzung nach Anspruch 1, den Schritt der Herstellung eines Rohelements mit dieser Zusammensetzung und den Schritt des Brennens unter geeigneten Sinterbedingungen, um Aluminatphasen von Mangan und/oder Cobalt zu erzeugen.

10. Verfahren zur Herstellung nach Anspruch 9, dadurch gekennzeichnet, daß die Zusammensetzung mindestens 94 % Aluminiumoxid umfaßt.

11. Verfahren zur Herstellung nach Anspruch 9 oder 10, dadurch gekennzeichnet, daß der Gehalt an Mn₃O₄ in etwa 1,7 bis 1,8 % und der Gehalt an TiO₂ in etwa 0,8 bis 0,9 % beträgt.

12. Verfahren zur Herstellung nach Anspruch 11, dadurch gekennzeichnet, daß der Sinterschritt darin besteht, das Rohelement während etwa einer Stunde einer Temperatur von 1.510 bis 1.540°C auszusetzen.

13. Verfahren zur Herstellung nach irgendeinem der Ansprüche 9 bis 12, dadurch gekennzeichnet, daß das SiO₂ in Form von Kaolin oder Talk eingeführt wird.

14. Verfahren nach irgendeinem der Ansprüche 9 bis 13, dadurch gekennzeichnet, daß der Gehalt an Oxid oder Oxidmischung der Übergangselemente 0,8 bis 1,6 %, bevorzugt weniger als 1,2 % beträgt.

15. Verfahren zur Herstellung nach irgendeinem der Ansprüche 9 bis 14, dadurch gekennzeichnet, daß das Oxid oder die Oxidmischung der Übergangselemente in Form von Aluminaten oder Oxiden eingeführt wird.

16. Verfahren zur Herstellung nach irgendeinem der Ansprüche 9 bis 15, dadurch gekennzeichnet, daß der Gehalt an MgO 0,6 bis 0,7 Gew.-% beträgt.

17. Verfahren zur Herstellung nach irgendeinem der Ansprüche 9 bis 16, dadurch gekennzeichnet, daß das Oxid ein Oxid oder ein Aluminat von Cobalt enthält.

18. Paar von Reibungselementen, von denen eines mindestens umfaßt:
- mindestens 90 Gew.-% Aluminiumoxid.
- 1,7 bis 2 Gew.-% Mn₃O₄,
- 0,8 bis 1 Gew.-% TiO₂,
- 0,5 bis 1,5 Gew.-% SiO₂,
- höchstens 1 Gew.-% MgO,
- 0,6 bis 1,6 Gew.-% eines Oxids oder einer Oxidmischung von Übergangselementen, wie Ni, Co, Cr, Fe, Cu,
- höchstens insgesamt 0,5 % durch Verunreinigungen gebildeter Rest,
wobei das Element eine Dichte von mindestens 90 % der maximalen theoretischen Dichte besitzt und einen mit Röntgenstrahlen detektierbaren Teil von Aluminatphasen von Mangan und/oder Cobalt umfaßt.

19. Paar von Reibungselementen nach Anspruch 18, dadurch gekennzeichnet, daß der Gehalt an Aluminiumoxid mindestens 94 % beträgt.

20. Paar von Reibungselementen nach Anspruch 18 oder 19, dadurch gekennzeichnet, daß der Gehalt an Mn₃O₄ in etwa 1,7 bis 1,8 % und der Gehalt an TiO₂ in etwa 0,8 bis 0,9 % beträgt.

21. Paar von Reibungselementen nach irgendeinem der Ansprüche 18 bis 20, dadurch gekennzeichnet, daß der Gehalt an Oxid oder Oxidmischung der Übergangselemente, wie Ni, Co, Fe, Cu, Cr, 0,8 bis 1,6 Gew.-%, bevorzugt mindestens 1,2 Gew.-% beträgt.

22. Paar von Reibungselementen nach irgendeinem der Ansprüche 18 bis 21, dadurch gekennzeichnet, daß der Gehalt an MgO 0,6 bis 0,7 % beträgt.

23. Paar von Reibungselementen nach irgendeinem der Ansprüche 18 bis 22, dadurch gekennzeichnet, daß die beiden Reibungselemente in etwa dieselbe Zusammensetzung besitzen.

24. Paar von Reibungselementen nach irgendeinem der Ansprüche 20 bis 22, dadurch gekennzeichnet, daß das andere Reibungselement im wesentlichen 1 bis 2 % MgO und 3 bis 4 % SiO₂ umfaßt, und der Rest, bis auf die Verunreinigungen, Aluminiumoxid ist.

25. Paar von Reibungselementen nach Anspruch 24, dadurch gekennzeichnet, daß der Gehalt an MgO 1 bis 1,5 % und der Gehalt an SiO₂ 3 bis 3,5 % beträgt.

26. Paar von Reibungselementen nach irgendeinem der Ansprüche 18 bis 25, dadurch gekennzeichnet, daß das Oxid ein Oxid oder ein Aluminat von Cobalt enthält.
